# EUROPÄISCHE PATENTANMELDUNG

(11) **EP 3 683 110 A1**
(43) Veröffentlichungstag der Anmeldung: **22.07.2020**
(21) Anmeldenummer: 19212478.2
(22) Anmeldetag: 29.11.2019
(51) Int. Cl.: B60T 8/32, B62L 1/00, B62L 3/00, B62M 1/00

(54) **BREMSASSISTENZEINRICHTUNG**

(30) Priorität: 18.12.2018 DE 102018222163
(71) Anmelder: Robert Bosch GmbH, 70442 Stuttgart (DE)
(72) Erfinder: Moia, Alessandro, 71088 Holzgerlingen (DE)

(57) **Zusammenfassung**

Es wird eine Bremsassistenzeinrichtung (100) für eine hydraulische Bremsanlage (30), insbesondere für ein mit Muskelkraft und/oder mit Motorkraft antreibbares Fahrzeug (1), Fahrrad, Elektrofahrrad, eBike und/oder Pedelec, vorgeschlagen. Die Bremsassistenzeinrichtung (100) umfasst ein Hydrauliksystem (5) zur Übertragung eines Fluiddrucks zu einer Bremse (33). Das Hydrauliksystem (5) umfasst dabei mindestens eine Bremsleitung (32). Erfindungsgemäß weist mindestens eine Bremsleitung (32) eine Ummantelung (36) auf, wobei die Ummantelung (36) ein aktives Material (37) aufweist. Die Bremsassistenzeinrichtung (30) umfasst weiterhin eine Steuereinheit (10), welche eingerichtet ist, insbesondere in Abhängigkeit von einer Erkennung eines aktuellen Fahrzustandes, das aktive Material (37) anzusteuern und dadurch eine Bremsdruckregelung auszuführen.

## Beschreibung

Die vorliegende Erfindung betrifft eine Bremsassistenzeinrichtung, eine hydraulische Bremsanlage sowie ein Fahrzeug. Die vorliegende Erfindung betrifft insbesondere eine Bremsassistenzeinrichtung für eine hydraulische Bremsanlage, insbesondere für ein mit Muskelkraft und/oder mit Motorkraft antreibbares Fahrzeug, ein Fahrrad, Elektrofahrrad, eBike, Pedelec, Motorrad, Kleinkraftrad oder einen Scooter, eine hydraulische Bremsanlage für ein mit Muskelkraft und/oder mit Motorkraft antreibbares Fahrzeug, sowie ein mit Muskelkraft und/oder mit Motorkraft antreibbares Fahrzeug als solches, insbesondere ein Fahrrad, Elektrofahrrad, eBike, Pedelec, Motorrad, Kleinkraftrad oder ein Scooter.

Zum Abbremsen von Rädern an Fahrzeugen werden auch hydraulische Bremsanlagen verwendet. Aus Sicherheitsgründen werden bei derartigen Bremsanlagen vermehrt Bremsassistenzeinrichtungen im Sinne eines Antiblockierschutzes (ABS) eingesetzt. Dabei soll mit derartigen Bremsassistenzeinrichtungen ein Blockieren eines gebremsten Rades verhindert werden, um einen möglichst geringen Bremsweg und/oder einen möglichst hohen Grad an Spurtreue beim Bremsen zu erreichen.

Bremssysteme für Zweiräder sind aus dem Stand der Technik in unterschiedlichen Ausgestaltungen bekannt. Hierbei sind bei Motorrädern und Fahrrädern, insbesondere auch bei Elektrofahrrädern, Bremssysteme mit Hydrauliksystemen im Einsatz. Insbesondere bei Fahrrädern sollten aufgrund der Gewichtsproblematik derartige Bremseinrichtungen möglichst gewichtsoptimiert ausgestaltet sein. Weiterhin werden im Stand der Technik Zweiräder verstärkt mit ABS-Systemen zur Erhöhung der Sicherheit beim Bremsen eingesetzt. Hierbei ist beispielsweise aus der DE 102010038525 A1 eine Bremsvorrichtung mit einem ABS-System bekannt, bei dem ein Piezostack im Hydrauliksystem verwendet wird.

Die im Stand der Technik bekannten Systeme realisieren eine Modulation des Bremsmoments beispielsweise in dem die Bremsflüssigkeitsmenge im Bremskreis moduliert wird. Das wird üblicherweise mit Hilfe einer Speicherkammer oder mit einer Verbindung zu einem Fluidreservoir realisiert.

### Offenbarung der Erfindung

Die erfindungsgemäße Bremsassistenzeinrichtung, insbesondere für Zweiräder oder dergleichen, mit den Merkmalen des Anspruchs 1 weist demgegenüber den Vorteil auf, dass eine sehr kompakte und kleinbauende ABS-Funktion in die Bremseinrichtung integriert werden kann.

Es wird eine Bremsassistenzeinrichtung für eine hydraulische Bremsanlage, insbesondere für ein mit Muskelkraft und/oder mit Motorkraft antreibbares Fahrzeug, Fahrrad, Elektrofahrrad, eBike und/oder Pedelec, vorgeschlagen.

Die Bremsassistenzeinrichtung umfasst ein Hydrauliksystem zur Übertragung eines Fluiddrucks zu einer Bremse. Das Hydrauliksystem umfasst dabei mindestens eine Bremsleitung. Erfindungsgemäß
weist mindestens eine Bremsleitung eine Ummantelung auf, wobei die Ummantelung ein aktives Material aufweist.

Unter einem aktiven Material soll dabei ein Material verstanden werden, das beim Anlegen eines Signals, beispielsweise einer elektrischen Spannung, einer Temperatur und/oder eines Magnetfeldes, eine mechanische Eigenschaft gezielt verändern kann, beispielsweise eine Ausdehnung in eine oder mehrere Raumrichtungen und/oder ein Volumen und/oder eine Fläche.

Die Bremsassistenzeinrichtung umfasst weiterhin eine Steuereinheit, welche eingerichtet ist, insbesondere in Abhängigkeit von einer Erkennung eines aktuellen Fahrzustandes, das aktive Material anzusteuern und dadurch eine Bremsdruckregelung auszuführen. Der Fahrzustand ist beispielsweise ein kritischer Fahrzustand, wenn beim Bremsen ein Blockieren eines Rades des Zweirades vorliegt, sodass die Steuereinheit eine ABS-Regelung ermöglicht. Hierbei ist die erfindungsgemäße Bremseinrichtung besonders energieeffizient und benötigt nur eine kleine Anzahl von Bauteilen. Ferner ist eine einfache Wartung der Bremseinrichtung möglich.

Dies wird erfindungsgemäß dadurch erreicht, dass eine Regelung, insbesondere eine Modulation des Bremsdrucks allein durch Ansteuern des aktiven Materials der Ummantelung einer Bremsleitung durchgeführt wird, ohne dass zusätzliche Ventile oder eine Speicherkammer benötigt werden. Eine Bremsleitung, die erfindungsgemäß eine Ummantelung mit einem aktiven Material aufweist, wird im Rahmen dieser Beschreibung auch als aktive Bremsleitung bezeichnet.

Die Unteransprüche zeigen bevorzugte Weiterbildungen der Erfindung.

Das aktive Material der Ummantelung der Bremsleitung kann beispielsweise ein piezoaktives Material und/oder ein elektrostriktives Material und/oder ein magnetostriktives Material und/oder ein thermostriktives Material und/oder ein elektroaktives Polymer aufweisen. Diesen Materialien ist gemeinsam, dass durch eine entsprechende Ansteuerung eine Volumenänderung, insbesondere eine lokale Volumenänderung der Ummantelung und damit auch der Bremsleitung erzeugt werden kann. Dadurch lässt sich in besonders einfacher Weise eine Regelung, insbesondere eine Modulation des Bremsdrucks durch Ansteuern des aktiven Materials der Ummantelung erreichen. Die Ummantelung kann eines oder mehrere derartige Materialien aufweisen.

Die Ummantelung mit einem aktiven Material kann die Bremsleitung vollständig umhüllen. Alternativ können nur bestimmte Abschnitte der Bremsleitung die Ummantelung mit einem aktiven Material aufweisen. Die Ansteuerung des aktiven Materials erfolgt bevorzugt derart, dass das Material abhängig von der Position entlang der Bremsleitung angesteuert werden kann. So können beispielsweise gezielt Einschnürungen oder Aufweitungen an bestimmten Stellen der Bremsleitung erzeugt werden und diese Einschnürungen oder Aufweitungen können entlang der Bremsleitung im Bereich der Ummantelung verschoben werden.

Bevorzugt wird das aktive Material derart durch die Steuereinheit angesteuert, dass durch Ansteuern zumindest eine Einschnürung der Bremsleitung erzeugt. Dabei erfolgt die Ansteuerung insbesondere derart, dass die Einschnürung entlang der Bremsleitung bewegbar ist. Durch die bewegliche Einschnürung kann das Fluid in der Bremsleitung in eine bestimmte Richtung, beispielsweise weg von der Bremse oder weg von einem Fluidreservoir gefördert werden, so dass der anliegende Bremsdruck geregelt wird.

Besonders bevorzugt die Steuereinheit eingerichtet, durch Ansteuern des aktiven Materials eine Mehrzahl von Einschnürungen der Bremsleitung zu erzeugen, wobei die Einschnürungen entlang der Bremsleitung von einem ersten Ende der Bremsleitung zu einem zweiten Ende der Bremsleitung bewegbar sind. Es wird also mit anderen Worten eine Welle von Einschnürungen erzeugt, die sich entlang der Bremsleitung bewegt. Dadurch wird eine Förderung des Fluids in der Bremsleitung in der Art eines Darms verwirklicht und der Wert des Bremsdrucks an einem Bremssattel kann durch die Geschwindigkeit der Kompressionswelle und mit der Kraft mit der die Bremsleitung an den Einschnürungen zusammengedrückt wird moduliert werden.

Nach einem weiteren Aspekt der Erfindung wird eine hydraulische Bremsanlage für ein mit Muskelkraft und/oder mit Motorkraft antreibbares Fahrzeug, Fahrrad, Elektrofahrrad, eBike und/oder Pedelec, vorgeschlagen, mit:
- mindestens einer Bremse,
- mindestens einer Bremsleitung, und
- mindestens einem Fluidreservoir, wobei wie zuvor beschrieben ausgestaltete eine Bremsassistenzeinrichtung vorgesehen ist, mit einem Hydrauliksystem zur Übertragung eines Fluiddrucks zu der Bremse mittels mindestens einer Bremsleitung, wobei mindestens eine der Bremsleitungen eine Ummantelung umfassend ein aktives Material aufweist.

In einer bevorzugten Ausführung einer erfindungsgemäßen Bremsanlage ist eine Gebereinrichtung vorgesehen mit einem Kolben und einem Zylinder als Fluidreservoir für das Bremsfluid. Die Bremsanlage weist einen Bremshebel auf, welcher mit dem Kolben verbunden ist, wobei bei Betätigung des Bremshebels der Kolben in dem Zylinder bewegt wird und dadurch ein Fluiddruck in der Bremsleitung aufgebaut wird. Durch ein Ansteuern des aktiven Materials der Ummantelung der Bremsleitung ist der Fluiddruck in der Bremsleitung regelbar, insbesondere modulierbar.

In einer alternativen bevorzugten Ausführung einer erfindungsgemäßen Bremsanlage ist die Bremsleitung direkt mit dem Fluidreservoir verbunden. Bei Aktivierung der Bremsanlage wird mindestens eine durch das aktive Material erzeugte Einschnürung der Bremsleitung entlang der Bremsleitung bewegt und so ein modulierter Fluiddruck in der Bremsleitung erzeugt. Durch die Bewegung der einen oder mehreren Einschnürungen entlang der Bremsleitung wird in dieser Ausführung das Fluid in der Art eines Darmes von dem Fluidreservoir zur Bremse gefördert und so ein geregelter Bremsdruck aufgebaut. In dieser Weise lässt sich eine sogenannte "by-Wire" Bremse realisieren.

In einer alternativen Bremsanlage bevorzugten Ausführung einer erfindungsgemäßen Bremsanlage weist das Hydrauliksystem ein Einlassventil auf. Durch Öffnen des Einlassventils wird ein Fluiddruck in der Bremsleitung und damit an einem Bremssattel aufgebaut. Durch ein Ansteuern des aktiven Materials wird der Fluiddruck in der Bremsleitung geregelt, insbesondere modulierbar. Besonders bevorzugt wird ein Bremsmoment an der Bremse reduziert, indem das Einlassventil geschlossen wird und durch Ansteuern des aktiven Materials das Volumen der Bremsleitung erhöht wird. Das Bremsmoment kann anschließend wieder erhöht werden, indem durch Ansteuern des aktiven Materials das Volumen der Bremsleitung reduziert wird, beispielsweise auf das ursprüngliche Volumen. Diese Ausführung entspricht einer üblichen ABS Konfiguration mit Einlassventil und aktiver Speicherkammer, wobei die aktive Bremsleitung dabei die aktive Speicherkammer ersetzt.

Nach einem weiteren Aspekt der Erfindung wird ein mit Muskelkraft und/oder mit Motorkraft antreibbares Fahrzeug vorgeschlagen, insbesondere ein Fahrrad, Elektrofahrrad, eBike oder Pedelec, mit:
- mindestens einem Rad und
- einer Bremsanlage zum Bremsen des mindestens einen Rades, die wie zuvor beschrieben ausgebildet ist.

### Kurzbeschreibung der Figuren

Figur 1 zeigt ein Elektrofahrrad als eine bevorzugte Ausführungsform des erfindungsgemäßen Fahrzeugs.
Figur 2 zeigt schematisch ein erstes Ausführungsbeispiel einer erfindungsgemäßen Bremsassistenzeinrichtung.
Figur 3 zeigt schematisch das Funktionsprinzip der aktiven Bremsleitung gemäß dem ersten Ausführungsbeispiel nach Figur 2.
Figur 4 zeigt schematisch ein zweites Ausführungsbeispiel einer erfindungsgemäßen Bremsassistenzeinrichtung zusammen mit einer Darstellung des Funktionsprinzips.
Figur 5 zeigt schematisch ein drittes Ausführungsbeispiel einer erfindungsgemäßen Bremsassistenzeinrichtung.

Unter Bezugnahme auf die beigefügten Figuren werden Ausführungsformen der Erfindung im Detail beschrieben.

### Bevorzugte Ausführungen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

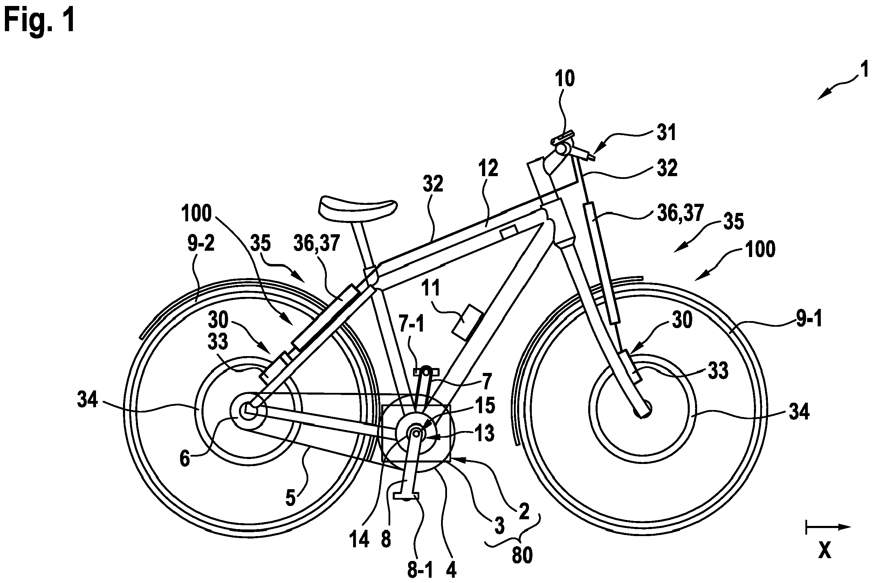

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 sind ein Ritzel 6 und gegebenenfalls eine Gangschaltung angeordnet. Kurbeltrieb 2 und elektrischer Antrieb 3 bilden den Antrieb 80 des Fahrzeugs 1.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 oder Gepäckträger ist ferner Batterie 11 ausgebildet, welche zur Stromversorgung des elektrischen Antriebes 3 dient.

Im Rahmen 12 oder in einer Antriebseinheit integriert ist ferner ein Kurbellager 13 oder Tretlager, welches ein Kurbelgehäuse 14 und eine Kurbelwelle 15 aufweist.

Im Bereich einer Bremsanlage 30, mittels welcher über Bremsleitungen 32 bei Betätigung des Bremshebels 31 ein Zugriff auf die Bremsschreiben 34 initiierbar ist, ist auch eine Ausführungsform der erfindungsgemäßen Bremsassistenzeinrichtung 100 vorgesehen, entweder für eine der Bremsen 33 oder für beide Bremsen 33. In der Darstellung der Figur 1 weist die Bremsanlage 30 im Bereich jeder der Bremsleitungen 32 eine Ummantelung umfassend ein aktives Material auf. Die Steuereinheit 10 ist ausgebildet, das aktive Material der Ummantelungen der Bremsleitungen 32, insbesondere in Abhängigkeit von einer Erkennung eines Fahrzustandes des Fahrzeugs 1, anzusteuern, um einen Bremsdruck der Bremsleitung 32 zu regeln und zu modulieren und so eine ABS-Funktion bereitzustellen.

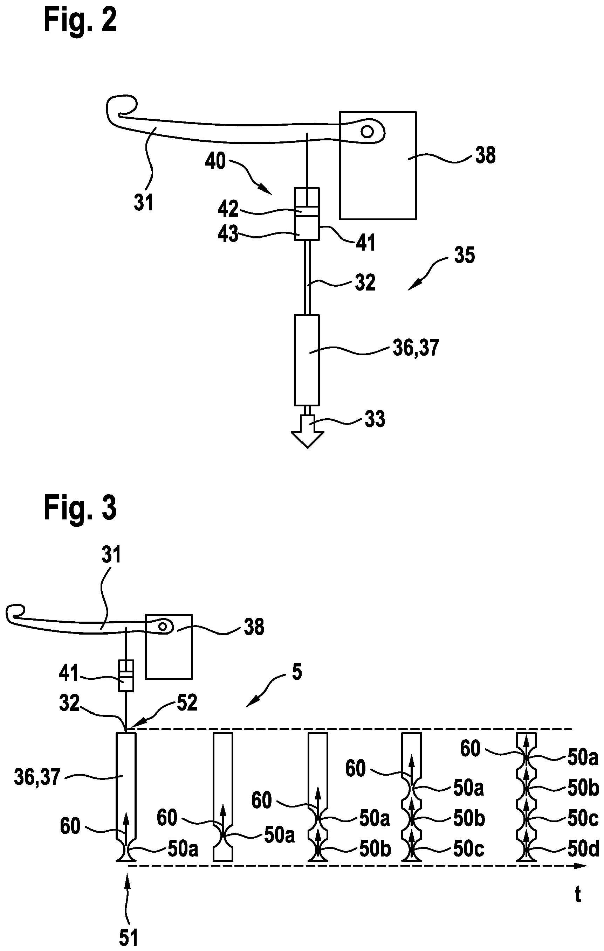

Wie aus Figur 2 ersichtlich ist, umfasst eine Bremsassistenzeinrichtung in einer möglichen Ausführung der Erfindung einen Bremshebel 31 sowie eine Gebereinrichtung 40. Die Gebereinrichtung 40 ist unmittelbar am Bremshebel 31 angeordnet. Dadurch kann ein sehr kompakter und platzsparender Aufbau erreicht werden. Der Bremshebel 31 ist an einer schematisch dargestellten Lenkerstange 38 des Zweirads 1 angeordnet.

Die Gebereinrichtung 40 ist Zylinder-Kolben-Einrichtung und umfasst einen Zylinder 41 und einen Geberkolben 42. Der Geberkolben 41 ist dabei mit dem Bremshebel 31 gekoppelt, was in Figur 2 schematisch dargestellt ist. Vom Zylinder 41 geht ferner eine Bremsleitung 32 ab, welche zu einer Bremse 33 führt. Der Zylinder bildet somit ein Fluidreservoir 41, wobei bei Betätigung des Bremshebels 31 das Fluid 43 in dem Kolben 41, beispielsweise ein Hydrauliköl, in die Bremsleitung 32 gedrückt wird und einen Bremsdruck erzeugt, der beispielsweise an einem Bremssattel anliegt. Um den Bremsdruck an dem Bremssattel im Fall einer kritische Fahrsituation abzubauen und ein Blockieren des gebremsten Rads zu verhindern, wird die mit dem aktiven Material 37 ummantelte Bremsleitung 32 beispielsweise wie in der Figur 3 dargestellt gesteuert:
Zunächst wird an dem der Bremse 33 zugewandten Ende 51 der aktiven Bremsleitung 32 eine erste Kompressionsstelle, mit anderen Worten eine erste Einschnürung 50a erzeugt, indem das aktive Material 37 lokal angeregt wird. Diese Einschnürung 50a wird anschließend nach oben in Richtung des Fluidreservoirs 41 bewegt, indem der Anregungspunkt des aktiven Materials 37 durch eine entsprechende Ansteuerung nach oben bewegt wird. Sobald die erste Einschnürung 50a einen gewissen Punkt in der Bremsleitung 32 erreicht hat, dann wird eine zweite Einschnürung 50b bzw. Kompressionsstelle erzeugt, die ähnlich wie die erste nach oben bewegt wird. Dieser Vorgang wird wiederholt mit weiteren Einschnürungen 50c, 50d, die sich entlang der Bremsleitung 32 in Richtung des Fluidreservoirs 41 bewegen. Somit wird eine Kraft auf die Bremsflüssigkeit in der Bremsleitung 32 aktuiert, die derart gerichtet ist, dass die Bremsflüssigkeit von dem Bremssattel 33 in Richtung Bremshebel 31 gefördert wird, wie durch die Pfeile 60 angedeutet ist. Dadurch wird der Bremsdruck an dem Bremssattel der Bremse 33 und dementsprechend das Bremsmoment reduziert. Die Förderung der Bremsflüssigkeit erfolgt hierbei ähnlich wie bei einem Darm. Der Betrag des Bremsdrucks an dem Bremssattel der Bremse 33 kann durch die Geschwindigkeit der durch die bewegten Einschnürungen 50a - 50d erzeugten Kompressionswelle und/oder durch die Kraft mit der die Bremsleitung 32 an den Einschnürungen 50a - 50d zusammengedrückt wird, moduliert werden.

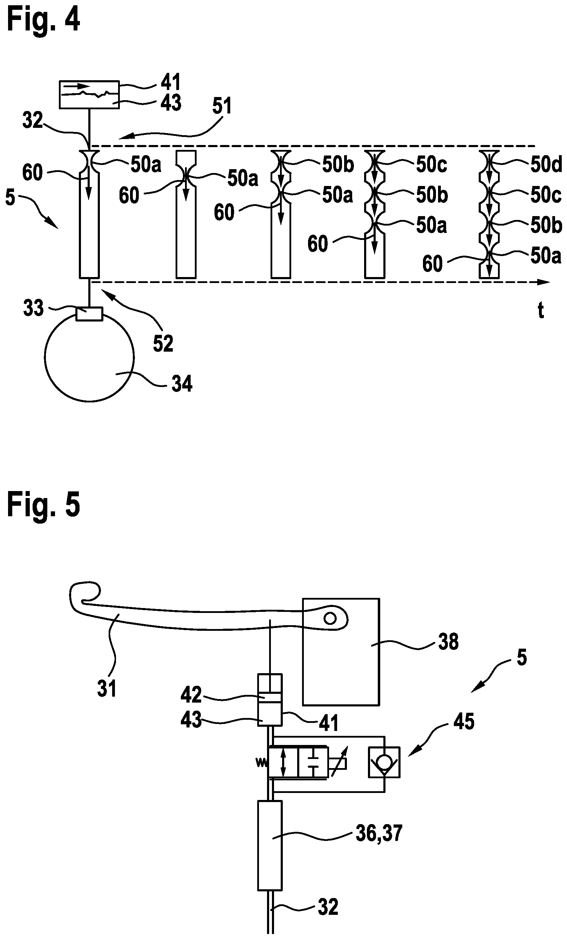

Das vorgestellte Konzept kann modifiziert werde um eine sogenannte "By-wire" Bremse zu realisieren, wie in Figur 4 dargestellt ist. In dieser Ausführung ist keine direkte Verbindung von einem Bremshebel zu dem Fluidreservoir 41 vorgesehen. Stattdessen ist die Bremsleitung 332 direkt mit dem Fluidreservoir verbunden. Eine Betätigung des Bremshebels führt dazu, dass eine Kompressionswelle, also eine Mehrzahl von bewegten Einschnürungen 50a - 50d entlang der aktiven Bremsleitung 32 in Richtung 60 der Bremse 33 erzeugt wird, wodurch die Bremsflüssigkeit 43 direkt von dem Fluidreservoir 41 zum Bremssattel der Bremse 33 gefördert wird. In diesem Fall ist verläuft die Bewegung der Einschnürungen von dem dem Fluidreservoir zugewandten Ende 51 der Bremsleitung zu dem der Bremse 33 zugewandten Ende 52. Das gesamte Bremsmoment, das damit an dem Bremssattel der Bremse 33 erzeugt wird kann wiederrum durch die Geschwindigkeit der Kompressionswelle und mit der Kraft mit der die Bremsleitung 32 an den Einschnürungen 50a - 50d zusammengedrückt wird, moduliert werden.

Die aktive Bremsleitung 32 kann, wie in Figur 5 dargestellt ist, auch eine Standard- ABS Konfiguration mit Einlassventil 45 und aktiver Speicherkammer realisieren. Hierbei ersetzt die aktive Bremsleitung 32 die aktive Speicherkammer. In dieser Konfiguration kann das Bremsmoment an dem Bremssattel der Bremse 33 reduziert werden in dem das Einlassventil 45 geschlossen wird und durch entsprechende Ansteuern des aktiven Material 37 das Volumen der Bremsleitung 32 erhöht wird. Das Bremsmoment kann wieder aufgebaut werden in dem das aktive Material 37 derart angesteuert wird, das die Bremsleitung in ihre ursprüngliche Dimension komprimiert wird.

## Patentansprüche

1. Bremsassistenzeinrichtung (100) für eine hydraulische Bremsanlage (30), insbesondere für ein mit Muskelkraft und/oder mit Motorkraft antreibbares Fahrzeug (1), Fahrrad, Elektrofahrrad, eBike und/oder Pedelec, umfassend
- ein Hydrauliksystem (5) zur Übertragung eines Fluiddrucks zu einer Bremse (33) mittels mindestens einer Bremsleitung (32),
- **dadurch gekennzeichnet, dass** mindestens eine Bremsleitung eine Ummantelung (36) aufweist, wobei die Ummantelung ein aktives Material aufweist (37), wobei
- die Bremsassistenzeinrichtung (100) eine Steuereinheit (10) aufweist, welche eingerichtet ist, das aktive Material (37), insbesondere in Abhängigkeit von einer Erkennung eines Fahrzustandes des Fahrzeugs (1), anzusteuern, um einen Bremsdruck der Bremsleitung (32) zu regeln, insbesondere zu modulieren.

2. Bremsassistenzeinrichtung (100) nach Anspruch 1, **dadurch gekennzeichnet, dass** das aktive Material (37)
- ein piezoaktives Material und/oder
- ein elektrostriktives Material und/oder
- ein magnetostriktives Material und/oder
- ein thermostriktives Material und/oder
- ein elektroaktives Polymer
aufweist.

3. Bremsassistenzeinrichtung (100) nach einem der Ansprüche 1 oder 2, **dadurch gekennzeichnet, dass** die Steuereinheit (10) eingerichtet ist, durch Ansteuern des aktiven Materials (37) zumindest eine Einschnürung (50a, 50b, 50c, 50d) der Bremsleitung (32) zu erzeugen, wobei die Ansteuerung derart erfolgt, dass die Einschnürung (50a, 50b, 50c, 50d) entlang der Bremsleitung (32) bewegbar ist.

4. Bremsassistenzeinrichtung (1000) nach Anspruch 3, **dadurch gekennzeichnet, dass** die Steuereinheit (10) eingerichtet ist, durch Ansteuern des aktiven Materials (37) eine Mehrzahl von Einschnürungen (50a, 50b, 50c, 50d) der Bremsleitung (32) zu erzeugen, wobei die Einschnürungen (50a, 50b, 50c, 50d) entlang der Bremsleitung von einem ersten Ende (51) der Bremsleitung zu einem zweiten Ende (52) der Bremsleitung (32) bewegbar sind.

5. Hydraulische Bremsanlage (30) für ein mit Muskelkraft und/oder mit Motorkraft antreibbares Fahrzeug (1), Fahrrad, Elektrofahrrad, eBike und/oder Pedelec, mit:
- mindestens einer Bremse (33),
- mindestens einer Bremsleitung (32),
- mindestens einem Fluidreservoir (41),
**gekennzeichnet durch**
- eine Bremsassistenzeinrichtung (100) nach einem der Ansprüche 1 bis 4 mit einem Hydrauliksystem (5) zur Übertragung eines Fluiddrucks zu der Bremse (33) mittels mindestens einer Bremsleitung (32), wobei mindestens eine der Bremsleitungen (32) eine Ummantelung (36) umfassend ein aktives Material (37) aufweist.

6. Bremsanlage (30) nach Anspruch 5, wobei das Hydrauliksystem (5) eine Gebereinrichtung (40) mit einem Kolben (42) und einem Zylinder als Fluidreservoir (41) mit Bremsfluid (43) umfasst, und wobei die Bremsanlage (30) einen Bremshebel (31) aufweist, welcher mit dem Kolben (42) verbunden ist und wobei bei Betätigung des Bremshebels (31) der Kolben (42) in dem Zylinder (41) bewegt wird und dadurch ein Fluiddruck in der Bremsleitung (32) aufgebaut wird und wobei durch ein Ansteuern des aktiven Materials (37) der Fluiddruck in der Bremsleitung (32) modulierbar ist.

7. Bremsanlage (30) nach Anspruch 5, wobei die Bremsleitung (32) direkt mit dem Fluidreservoir (41) verbunden ist und bei Aktivierung der Bremsanlage (30) mindestens eine durch das aktive Material (37) erzeugte Einschnürung (50a, 50b, 50c, 50d) der Bremsleitung (32) entlang der Bremsleitung (32) bewegt wird um einen modulierten Fluiddruck in der Bremsleitung (32) zu erzeugen.

8. Bremsanlage (30) nach Anspruch 5, wobei das Hydrauliksystem (5) ein Einlassventil (45) aufweist, wobei durch Öffnen des Einlassventils (45) ein Fluiddruck in der Bremsleitung (32) aufgebaut wird und wobei durch ein Ansteuern des aktiven Materials (37) der Fluiddruck in der Bremsleitung (32) modulierbar ist.

9. Bremsanlage (30) nach Anspruch 8, wobei ein Bremsmoment an der Bremse (33) reduzierbar ist, indem das Einlassventil (45) geschlossen wird und durch Ansteuern des aktiven Materials (37) das Volumen der Bremsleitung (32) erhöht wird und wobei das Bremsmoment erhöhbar ist, indem durch Ansteuern des aktiven Materials (37) das Volumen der Bremsleitung (32) reduziert wird.

10. Mit Muskelkraft und/oder mit Motorkraft antreibbares Fahrzeug (1) und insbesondere Fahrrad, Elektrofahrrad, eBike oder Pedelec, mit:
- mindestens einem Rad (9-1, 9-2) und
- einer Bremsanlage (30) nach einem der Ansprüche 5 bis 9 zum Bremsen des mindestens einen Rades (9-1, 9-2).
